# EUROPÄISCHE PATENTSCHRIFT

(11) **EP 0 841 511 B1**
(45) Veröffentlichungstag und Bekanntmachung des Hinweises auf die Patenterteilung: **13.06.2001**
(21) Anmeldenummer: 97118968.3
(22) Anmeldetag: 30.10.1997
(51) Int. Cl.: F16K 41/02, F16K 5/06

(54) **Drehventil**
Rotary valve
Vanne rotative

(43) Veröffentlichungstag der Anmeldung: 13.05.1998
(73) Patentinhaber: Pfannenschmidt, Erhard, Ing.grad., 22147 Hamburg (DE)
(72) Erfinder: Pfannenschmidt, Erhard, Ing.grad., 22147 Hamburg (DE)
(74) Vertreter: Patentanwälte Hauck, Graalfs, Wehnert, Döring, Siemons

(56) Entgegenhaltungen:
- DE-A- 2 140 975
- DE-A- 2 658 256
- DE-A- 4 104 003
- DE-U- 7 815 061
- FR-A- 1 482 483
- US-A- 2 980 390
- US-A- 3 458 172

## Beschreibung

Die Erfindung bezieht sich auf ein Drehventil nach dem Oberbegriff des Patentanspruchs 1. Ein derartiges Drehventil ist aus der US-A-3458172 Patentschuft bekannt.

Die Abdichtung von Schaltwellen gegenüber einem Armaturengehäuse ist kritisch, weil Undichtigkeiten auftreten können, insbesondere bei Drehbetätigung der Schaltwellen mittels einseitiger Handhebel. Dadurch wird zwangsläufig auf die Schaltwelle ein Kippmoment ausgeübt, durch das die Abdichtung einerseits zusammengepreßt wird und andererseits Spaltbildungen ermöglicht.

Aus DE-U-78 15 061 ist eine schaltbare Armatur bekanntgeworden, deren druckbeaufschlagte Schaltwelle zur Sicherung im Armaturengehäuse zwei axial voneinander beabstandete radiale Bunde mit sphärischen Dichtflächen hat, die jeweils über Dichtringe mit sphärischen Sitzflächen an Abstufungen einer zweigestuften Schaltwellenbohrung abgestützt sind. Die Schaltwelle wird sowohl unter dem Gehäuseinnendruck als auch infolge der Vorspannung von Tellerfedern in ihren Dichtsitz gepreßt und gezogen, wobei die Tellerfedern einerseits an der Außenseite des Armaturengehäuses und andererseits an einem schaltwellenfesten Widerlager abgestützt sind. Diese Konstruktion hat den Nachteil, daß der Innendruck der Schaltarmatur sowie eine Abnutzung der Abdichtungen der Federvorspannung entgegenwirken. Die Schaltwelle ist nur unter erheblicher Spaltbildung zwischen Bunden und Dichtflächen kippbar, weil die sphärischen Dichtsitze axial erheblich versetzte Radienmittelpunkte haben.

Aus DE 21 40 975 ist eine Schaltwellenabdichtung für Schaltarmaturen bekannt, deren Schaltwelle einen Ringbund mit ebenen Ringflächen für die Anlage zweier Dichtanordnungen aus jeweils zwei ineinandergreifenden keilförmigen Dichtringen aufweist. Ferner offenbart die DE 26 58 256 eine Abdichtvorrichtung für die Spindel einer Armatur, bei der ein Dichtring mit einem kugelförmigen Dichtsitz mittels Tellerfeder gegen die sphärische Dichtfläche eines Radialbundes der Spindel gedrückt wird. Die Dichtfläche ist auf der innenliegenden Seite des Bundes angeordnet, so daß die Tellerfedern an einer Innenstufe der Spindelbohrung abgestützt sind und Kontakt mit einem durchströmenden Medium bekommen. Der Bund ist außen über eine ebene Ringfläche an einem gehäusefesten Widerlager abgestützt, so daß eine Kippbeweglichkeit der Spindel nicht gegeben ist.

Schließlich ist aus der DE 41 04 003 eine Schaltarmatur bekanntgeworden, bei der ein einziger Bund an der Schaltwelle gegenüberliegende Dichtflächen ausbildet, die sphärisch geformt sind und die mit entsprechend geformten Dichtringen auf gegenüberliegenden Seiten zusammenwirken, wobei die Feder auf einen Druckring wirkt, der gegen den zugewandten Dichtring anliegt, um ihn gegen den Bund anzupressen. Bei dieser Schaltarmatur werden die Dichtringe und der Bund der Schaltwelle spielfrei zusammengedrückt. Die Druckfeder garantiert einen Ausgleich von Fertigungstoleranzen, Ausdehnungsänderungen und Verschleiß, so daß im Normalfall ein Nachstellen der Abdichtung erforderlich ist. Durch die sphärischen Dicht- und Sitzflächen auf beiden Seiten desselben Bundes ist eine spaltfreie Dichtanlage gegeben und werden Ablagerungen durch Medienanschluß zwischen Schaltwelle und Schaltwellenbohrung verhindert. Die bekannte Konstruktion erfordert hohe Drehmomente zu ihrer Betätigung, was auch für die weiter oben beschriebenen Schaltwellenlagerungen der Fall ist.

Der Erfindung liegt die Aufgabe zugrunde, eine Schaltarmatur mit einer Schaltwellenlagerung zu schaffen, bei der auf einen Dichtring wirkende Kippmomente vermieden werden und eine Leichtgängigkeit bei Betätigung der Schaltwelle ermöglicht wird.

Diese Aufgabe wird durch die Merkmale des Patentanspruchs 1 gelöst.

Bei der erfindungsgemäßen Schaltarmatur ist eine Linienberührung zwischen Dichtring und Dichtfläche vorgesehen. Hierzu ist die Dichtfläche im Querschnitt konkav geformt, der Dichtring im Anlagebereich ist sphärisch geformt und der Radius der Krümmung des Dichtringes ist kleiner als der der Dichtfläche.

Die erfindungsgemäße Ausbildung der Schaltwellenlagerung hat eine Reihe von Vorteilen. Durch die Linienberührung wird eine Abdichtung am Schaltwellenbund erhalten, die auch bei Querkräften an der Schaltwelle und damit bei einem entsprechenden Neigungswinkel der Schaltwelle beibehalten bleibt, so daß kein Produkt in den Innenraum zwischen Schaltwelle und Schaltwellenbohrung dringen kann. Auf den Dichtring wird kein wesentliches Moment beim Ankippen der Schaltwelle ausgeübt. Die Berührungslinie zwischen Dichtring und Bund mag beim Ankippen der Schaltwelle leicht verschoben werden, dadurch wird jedoch die Abdichtung als solche nicht beeinträchtigt. Ein weiterer Vorteil der erfindungsgemäßen Lösung besteht darin, daß das erforderliche Drehmoment zur Betätigung des Schaltorgans der Armatur relativ gering ist.

Die erfindungsgemäße Konstruktion hat schließlich den Vorteil, daß auch bei Dichtringen aus keramischem oder metallischem Werkstoff trotz relativ geringer Drehmomente zur Betätigung eine sichere Abdichtung erzielt wird. Nach einer anderen Ausgestaltung der Erfindung ist in der Schaltwellenbohrung ein weiterer buchsenförmiger Dichtring eingebracht, der von einem Druckring beaufschlagt ist, der mit der Feder zusammenwirkt, vorzugsweise einer Tellerfeder. Um auch hier das Drehmoment zur Betätigung des Schaltorgans klein zu halten, sieht die Erfindung eine Linienberührung zwischen Tellerfeder und Druckring vor, wobei der Druckring nach einer Ausgestaltung der Erfindung im Eingriffsbereich mit der Tellerfeder konvex gewölbt ist. Außerdem wird auf diese Weise eine gleichmäßige Anpressung des Druckrings an den zugehörigen Dichtring sowie eine gleichmäßige Anpassung des Dichtrings am Bund der Schaltwelle auch bei einem Kippen der Schaltwelle erhalten. Für eine zusätzliche Abdichtung kann nach einer Ausgestaltung der Erfindung der Dichtring in dem der Dichtfläche diagonal gegenüberliegenden Kantenbereich eine Ausnehmung aufweisen zur Aufnahme eines O-Dichtrings.

Die Erfindung wird nachfolgend anhand eines Ausführungsbeispiels näher erläutert.
- Fig. 1: zeigt im Schnitt einen Kugelhahn mit einer Schaltwellenlagerung nach der Erfindung.
- Fig. 2: zeigt vergrößert eine Einzelheit aus Fig. 1.
- Fig. 3: zeigt eine weitere Einzelheit aus Fig. 1.

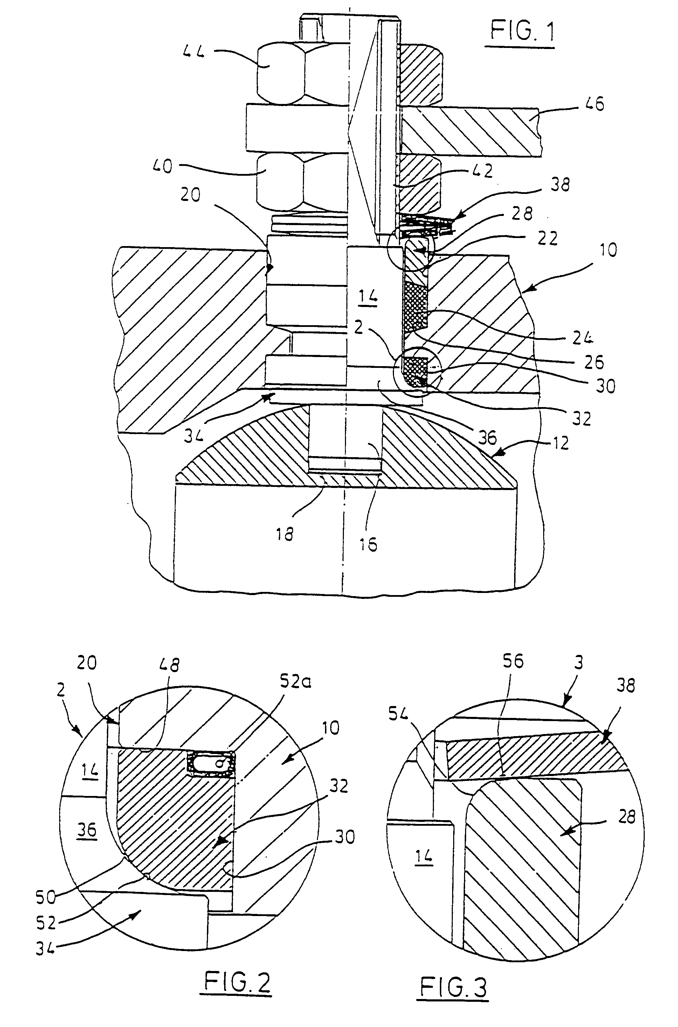

In Fig. 1 ist ein Gehäuse 10 eines Kugelhahns angedeutet mit einem Kugelküken 12, das mit Hilfe einer Schaltwelle 14 verdrehbar ist, indem ein Zapfen 16 in eine entsprechende Ausnehmung 18 eingreift.

Das Gehäuse 10 weist eine Bohrung 20 auf, mit einem ersten Bohrungsabschnitt 22, in dem eine buchsenförmige Dichtung 24 angeordnet ist. Durch eine Durchmesserverringerung der Bohrung 22 ist eine Schulter 26 gebildet, die schräg zur Bohrung 20 abfallend ist und auf der sich die Dichtung 24 abstützt. Die Dichtung 24 ist auch an der Oberseite mit einer Schrägfläche versehen, angepaßt an die Schrägfläche eines Druckrings 28, der passend im Bohrungsabschnitt 22 sitzt. In einem unteren Bohrungsabschnitt 30 sitzt ein Dichtring 32, auf dessen Einzelheiten noch weiter unten eingegangen wird. Der Dichtring wirkt zusammen mit einem radialen Bund 34 der Schaltwelle 14, die eine konkav gewölbte sphärische Dichtfläche 36 aufweist.

Oberhalb des Druckrings 28 ist ein aus zwei Tellerfedern bestehendes Federpaket 38 angeordnet, das von einer Mutter 40, die auf einen Gewindeabschnitt 42 der Schaltwelle 14 aufgeschraubt ist, unter Druck setzbar ist. Zwischen der Mutter 40 und einer weiteren Mutter 44 auf der Schaltwelle 14 ist ein Handhebel 46 angedeutet.

Fig. 2 zeigt die Einzelheit 2 nach Fig. 1 (eingekreist). Aus Fig. 2 ist zu erkennen, daß in dem unteren Bohrungsabschnitt 30 ein im wesentlichen im Querschnitt rechteckiger Dichtungsring 32 angeordnet ist und der sich mithin an dem Absatz 48 des Gehäuses 10 abstützt. Wie ferner zu erkennen, weist der Dichtring 32 auf der dem Bund 34 zugekehrten Seite eine konvex sphärische Form auf, wie bei 50 zu erkennen. Der Durchmesser des Radius der konvexen Wölbung ist etwas geringer als der der sphärischen Dichtfläche 36, so daß eine Linienanlage zwischen Dichtring 32 und Dichtfläche 36 stattfindet, wie bei 52 angedeutet. Diese Linienanlage ist unabhängig davon, ob die Schaltwelle 14, insbesondere aufgrund von Betätigungen, eine Kippneigung erfährt. Dadurch verlagert sich zwar die Berührungslinie 52, der Dichteffekt bleibt indessen erhalten.

Aufgrund der Federwirkung der Tellerfeder 34 wird der Bund 34 gegen den Dichtring 32 angepreßt, wobei Mediendruck im Inneren des Gehäuses 10 diese Wirkung noch unterstützt. Um eine zusätzliche Abdichtung zwischen Dichtring 32 und dem Bohrungsabschnitt 30 bzw. dem Absatz 48 zu erhalten, ist auf der der sphärischen Krümmung 55 gegenüberliegenden Kante ein O-Ring 52a in einer entsprechenden Ausnehmung eingesetzt.

Der Dichtring 32 kann auch beliebigem Material bestehen, beispielsweise aus Metall, Graphit, einem Elastomer oder dergleichen.

Fig. 3 zeigt die Einzelheit 3 nach Fig. 1 (eingekreist). Man erkennt, daß der Druckring 28 im oberen Bereich auf der der Schaltwelle 14 zugekehrten Seite konvex sphärisch gewölbt ist, wie bei 54 gezeigt. Auf diese Weise ergibt sich eine Linienanlage 56 an der unteren Tellerfeder des Federpakets 38, wodurch das erforderliche Drehmoment zur Verstellung des Kugelkükens 12 reduziert wird. Ein bereits erwähntes geringfügiges Neigen der Schaltwelle 14 beeinträchtigt nicht die gleichmäßige Federanpressung und damit die gleichmäßige Beaufschlagung des Dichtrings 24 durch den Druckring 28.

## Patentansprüche

1. Drehventil, insbesondere Hahn, Kugelhahn, Klappe oder dergleichen, mit einer drehbar und geringfügig kippbar in einer Schaltwellenbohrung (20) eines Gehäuses (10) geführten Schaltwelle (14) für ein Schaltorgan (12), die eine sphärische Dichtfläche (36) hat, einem mit der Dichtfläche (36) zusammenwirkenden Dichtring (32), der am Gehäuse (10) abdichtend abgestützt ist, wobei Dichtring (32) und Dichtfläche (36) federnd gegeneinander gedrückt sind, dadurch gekennzeichnet, daß die in einer Gehäusebohrung (20) aufgenommene Schaltwelle (14) von einer Feder (38) vom Schaltorgan (12) fortgespannt ist, der Dichtring (32) an einer Abstufung (48) der Gehäusebohrung (20) abgestützt ist, die Dichtfläche (36) konkav und die der Dichtfläche (36) zugekehrte Fläche (50) des Dichtrings (32) konvex ist, wobei der Radius der konvexen Fläche (50) kleiner ist als der der konkaven Dichtungsfläche (36), wodurch eine Linienberührung (52) zwischen den Flächen (36, 50) hergestellt wird.

2. Drehventil nach dem Anspruch 1, dadurch gekennzeichnet, daß der Dichtring (32) im übrigen Querschnitt rechteckförmig und von einer dazu passend geformten Abstützung abgestützt ist.

3. Drehventil nach einem der Ansprüche 1 und 2, dadurch gekennzeichnet, daß ferner eine stopfbuchsenartige Dichtung (24) vorgesehen ist mit einem in der Schaltwellenbohrung einsitzenden Dichtring (24) und einem von der Feder (38) beaufschlagten Druckring (28), der den buchsenartigen Dichtring (24) gegen eine Schulter (26) der Schaltwellenbohrung (20) andrückt.

4. Drehventil nach Anspruch 3, dadurch gekennzeichnet, daß die Feder eine Tellerfeder (38) ist und der Druckring (28) mit der Tellerfeder (38) Linienberührung (56) hat.

5. Drehventil nach Anspruch 4, dadurch gekennzeichnet, daß der Druckring (24) im Eingriffsbereich mit der Tellerfeder (38) konvex gewölbt (54) ist.

6. Drehventil nach einem der Ansprüche 1 bis 5, dadurch gekennzeichnet, daß der Dichtring (32) in dem der Dichtfläche (36) diagonal gegenüberliegenden Kantenbereich eine Ausnehmung aufweist zur Aufnahme einer O-Ringdichtung (52).

## Claims

1. A rotary valve, in particular ball cock, flap valve or the like, comprising a switching shaft (14) rotatably supported and slightly rockable in a shaft bore (20) within a housing (10) for a valve member (12), the valve member having a spherical sealing surface (36), a sealing ring (32) cooperating with the sealing surface (36), the sealing ring being sealingly supported at the housing (10), with the sealing ring (32) and the sealing surface (36) being resiliently forced against each other, characterized in that the switching shaft (14) accommodated in a bore of the housing (20) is biased away from the valve member (12) by spring means (38), the sealing ring (32) is supported by a step (48) of the bore (20) of the housing, the sealing surface (36) is concave and the surface (50) of the sealing ring (32) facing the sealing surface (36) is convex, with the radius of the convex surface being smaller than that of the concave sealing surface (36), whereby a line contact (52) is established between the surfaces (36, 50).

2. The valve of claim 1, wherein the sealing ring (32) in the remaining cross section is rectangular shaped and is supported by a support which is shaped adapted to this.

3. The valve according to one of claims 1 or 2, wherein there is further provided a gland-like seal (24) with a seal ring sitting in the switch shaft bore and with a pressure ring (28) which is engaged by a spring and which presses the gland-like sealing ring (24) against a shoulder (26) of the switch shaft bore.

4. The valve according to claim 3, wherein the spring is a disk spring (38) and the pressure ring (28) has a line contact with the disk spring.

5. The valve according to claim 4, wherein the pressure ring in the engagement region with the disk spring (38) is curved convex (54).

6. The valve according to one of claims 1 to 5, wherein the sealing ring (32) comprises on the outer circumferential edge portion, located diagonally with respect to the sealing surface, the edge portion having a recess for the accommodation of an O-shaped annular sealing ring (52).

## Revendications

1. Valve rotative, en particulier robinet, robinet à boisseau sphérique, robinet à papillon ou analogue, comportant un arbre de manoeuvre (14) guidé en pouvant tourner et légèrement basculer dans un alésage (20) d'arbre de manoeuvre d'un carter (10) pour un organe de manoeuvre (12) qui a une surface d'étanchéité (36), une bague d'étanchéité (32) coopérant avec la surface d'étanchéité sphérique (36) et s'appuyant en faisant étanchéité sur le carter (10), la bague d'étanchéité (32) et la surface d'étanchéité (36) étant pressées élastiquement l'une contre l'autre, caractérisée en ce que l'arbre de manoeuvre (14) logé dans l'alésage (20) de carter est maintenu écarté par un ressort (38) de l'organe de manoeuvre (12), la bague d'étanchéité (32) s'appuie sur un épaulement (48) de l'alésage (20) de carter, la surface d'étanchéité (36) est concave et la surface (50) de la bague d'étanchéité (32) tournée vers la surface d'étanchéité (36) est convexe, le rayon de la surface convexe (50) étant plus petit que celui de la surface d'étanchéité concave (36), ce qui produit un contact linéaire entre les surfaces (36, 50).

2. Valve rotative selon la revendication 1, caractérisée en ce que la bague d'étanchéité (32) a, dans le reste de la section transversale, une forme rectangulaire et est supportée par un appui de forme adaptée en conséquence.

3. Valve rotative selon l'une des revendications 1 et 2, caractérisée en ce qu'il est prévu en outre une garniture d'étanchéité (24) ressemblant à un presse-étoupe comportant une garniture d'étanchéité (24) logée dans l'alésage d'arbre de manoeuvre et une bague de serrage (28) soumis à l'action du ressort (38) qui serre la bague d'étanchéité (24) en forme de douille contre un épaulement (26) de l'alésage (20) d'arbre de manoeuvre.

4. Valve rotative selon la revendication 3, caractérisée en ce que le ressort est un ressort Belleville (38) et que la bague de serrage (28) a un contact linéaire (56) avec le ressort Belleville (38).

5. Valve rotative selon la revendication 4, caractérisée en ce que la bague de serrage (24) a une courbure convexe (54) dans la zone de contact avec le ressort Belleville (38).

6. Valve rotative selon l'une des revendications 1 à 5, caractérisée en ce que la bague d'étanchéité (32) présente dans la zone de bord opposée diagonalement à la surface d'étanchéité (36) un évidement destiné à recevoir un joint torique (52).
